# EUROPEAN PATENT APPLICATION

(11) **EP 3 328 165 A1**
(43) Date of publication of application: **30.05.2018**
(21) Application number: 17202944.9
(22) Date of filing: 22.11.2017
(51) Int. Cl.: H05B 37/02, F21V 21/14

(54) **YAW INDICATION USING AN ACCELEROMETER OR TILT SENSOR**

(30) Priority: 28.11.2016 EP 16200829
(71) Applicant: Philips Lighting Holding B.V., 5656 AE Eindhoven (NL)
(72) Inventor: BROERS, Harry, 5656 AE Eindhoven (NL); EKKEL, Jan, 5656 AE Eindhoven (NL); RAJAGOPALAN, Ruben, 5656 AE Eindhoven (NL)
(74) Representative: Verweij, Petronella Daniëlle

(57) **Abstract**

A method (500) for monitoring rotation of a lighting unit (200) includes the steps of: providing (510) a lighting unit comprising a sensor (32), a controller (22), a first gear (212) configured to rotate the lighting unit about a first axis, and a second gear (214) configured to rotate about a second axis, wherein the second axis is substantially perpendicular to the first axis; rotating (520) one of the first and second gears, wherein the rotation causes rotation of the lighting unit about the first axis from a first position to a second position; generating (530), by the sensor in response to rotation of the second gear, sensor data; and translating (540), by the controller, the sensor data into information about rotation of the first gear.

## Description

### FIELD OF THE INVENTION

The present disclosure is directed generally to methods and lighting units configured to detect yaw, and more specifically, to yaw detection using one or more accelerometers or tilt sensors.

### BACKGROUND

The development of smart lighting has resulted in an increasing demand for integrated sensing solutions in lighting systems and luminaires, including presence detection, motion detection, position detection, and more. As a result, a wide range of functionalities are being integrated in lighting units, ranging from presence sensing for light-control, orientation sensing for luminaire diagnostics, and environmental monitoring. In order to enable large-scale market penetration of intelligent lighting networks, there is also a strong demand for numerous sensing functionalities by integrating a minimal number of sensing modalities.

Position sensing and repositioning are among the lighting unit functionalities in high demand. For example, it is desirable to have lighting units that are capable of detecting and communicating their current position. It is also desirable to have lighting units that are capable of repositioning a light source from a first direction to a second direction, based at least in part on position detection of the lighting unit, especially in automated systems.

However, existing lighting units are limited in their ability to detect their position and accordingly are limited in their ability to reposition. Specifically, lighting units with a moveable position around an axis parallel to the direction of gravity are mostly unable to detect motion or a position about that axis, as accelerometers cannot detect a repositioning about that axis, a rotation typically referred to as yaw.

Accordingly, there is a continued need in the art for affordable lighting units and systems which are capable of detecting yaw using one or more accelerometers or tilt sensors.

### SUMMARY OF THE INVENTION

The present disclosure is directed to inventive methods and apparatus for a lighting unit configured to detect yaw, rotation of the lighting unit around an axis parallel to the direction of gravity. Various embodiments and implementations herein are directed to a lighting unit or system comprising a single or multiple axis accelerometer or a tilt sensor, and a mechanism that translates changes in pitch (the x axis) or roll (the *y* axis) into changes in yaw (the z axis), and vice versa.

The present disclosure is directed to inventive methods and apparatus for a lighting unit configured to detect yaw (the z axis), and to reposition itself around that axis. Various embodiments and implementations herein are directed to lighting units, such as ceiling lights among many other types of lighting units, with one or more integrated single-or multi-axis accelerometers or tilt sensors. The lighting unit also includes a gear or other mechanism that translates changes in pitch (the x axis) or roll (the *y* axis) into changes in yaw (the z axis), or translates changes in yaw into changes in pitch or roll. The lighting unit also comprises an algorithm configured to detect these changes using data from the one or more accelerometers or tilt sensors, and translate the information into positioning information. According to an embodiment, the lighting unit may modify or adapt one or more light characteristics based on the determined positioning information.

Generally, in one aspect, a method for monitoring rotation of a lighting unit is provided. The method includes: (i) providing a lighting unit comprising a sensor, a controller, a first gear configured to rotate the lighting unit about a first axis, and a second gear configured to rotate about a second axis, where the second axis is substantially perpendicular to the first axis, where the first and second gears are configured such that rotation of one of the first and second gear causes rotation of the other of the first and second gears, and where the lighting unit comprises a first position; (ii) rotating one of the first and second gears, where the rotation causes rotation of the lighting unit about the first axis from the first position to a second position; (iii) generating, by the sensor in response to rotation of the second gear, sensor data; and (iv) translating, by the controller, the sensor data into information about rotation of the first gear.

According to an embodiment, the first axis is substantially parallel to the direction of Earth's gravity.

According to an embodiment, the method further includes the step of determining, based on the determined rotation of the first gear, a relative position of the lighting unit.

According to an embodiment, the method further includes the step of communicating the determined rotation of the first gear or the determined relative position of the lighting unit.

According to an embodiment, the method further includes the step of modifying, based at least in part on the determined rotation of the first gear and/or the determined relative position of the lighting unit, a parameter of the light source.

According to an embodiment, the method further includes the steps of: (i) comparing the determined relative position of the lighting unit to a predetermined position; and (ii) optionally repositioning the lighting unit according to at least one of the determined relative position and the predetermined position.

According to an embodiment, the method further includes the step of repositioning, based on the determined relative position of the lighting unit, the lighting unit to a third position.

According to an aspect, a light unit is provided. The lighting unit includes: a sensor; a first gear configured to rotate the lighting unit about a first axis; a second gear configured to rotate about a second axis, wherein the second axis is substantially perpendicular to the first axis, and wherein the first and second gears are configured such that rotation of one of the first and second gear causes rotation of the other of the first and second gears; and a controller configured to: (i) receive sensor data from the sensor in response to rotation of the second gear, wherein the rotation of the second gear causes rotation of the lighting unit about the first axis from a first position to a second position; and (ii) translate the received sensor data into information about rotation of the first gear.

According to one aspect, a method for monitoring rotation of a lighting unit is provided. The method includes: (i) providing a lighting unit comprising a sensor, a controller, a first gear configured to rotate the lighting unit about a first axis, and a second gear configured to rotate about a second axis, where the second axis is substantially perpendicular to the first axis, where the first and second gears are configured such that rotation of one of the first and second gear causes rotation of the other of the first and second gears; (ii) rotating one of the first and second gears, wherein the rotation causes rotation of the lighting unit about the first axis from a first position to a second position; (iii) generating, by the sensor in response to rotation of the second gear, sensor data; (iv) translating, by the controller, the sensor data into information about rotation of the first gear; (v) determining, based on the determined rotation of the first gear, a relative position of the lighting unit; and (vi) repositioning, based on the determined relative position of the lighting unit, the lighting unit to a third position.

The term "light source" should be understood to refer to any one or more of a variety of radiation sources, including, but not limited to, LED-based sources (including one or more LEDs as defined above), incandescent sources (e.g., filament lamps, halogen lamps), fluorescent sources, phosphorescent sources, high-intensity discharge sources (e.g., sodium vapor, mercury vapor, and metal halide lamps), lasers, other types of electroluminescent sources, pyro-luminescent sources (e.g., flames), candle-luminescent sources (e.g., gas mantles, carbon arc radiation sources), photo-luminescent sources (e.g., gaseous discharge sources), cathode luminescent sources using electronic satiation, galvano-luminescent sources, crystallo-luminescent sources, kine-luminescent sources, thermo-luminescent sources, tribo luminescent sources, sonoluminescent sources, radio luminescent sources, and luminescent polymers.

The term "lighting unit" is used herein to refer to an apparatus including one or more light sources of same or different types. A given lighting unit may have any one of a variety of mounting arrangements for the light source(s), enclosure/housing arrangements and shapes, and/or electrical and mechanical connection configurations. Additionally, a given lighting unit optionally may be associated with (e.g., include, be coupled to and/or packaged together with) various other components (e.g., control circuitry) relating to the operation of the light source(s). An "LED-based lighting unit" refers to a lighting unit that includes one or more LED-based light sources as discussed above, alone or in combination with other non LED-based light sources.

In various implementations, a processor or controller may be associated with one or more storage media (generically referred to herein as "memory," e.g., volatile and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects of the present invention discussed herein. The terms "program" or "computer program" are used herein in a generic sense to refer to any type of computer code (e.g., software or microcode) that can be employed to program one or more processors or controllers.

In one network implementation, one or more devices coupled to a network may serve as a controller for one or more other devices coupled to the network (e.g., in a master/slave relationship). In another implementation, a networked environment may include one or more dedicated controllers that are configured to control one or more of the devices coupled to the network. Generally, multiple devices coupled to the network each may have access to data that is present on the communications medium or media; however, a given device may be "addressable" in that it is configured to selectively exchange data with (i.e., receive data from and/or transmit data to) the network, based, for example, on one or more particular identifiers (e.g., "addresses") assigned to it.

The term "network" as used herein refers to any interconnection of two or more devices (including controllers or processors) that facilitates the transport of information (e.g. for device control, data storage, data exchange, etc.) between any two or more devices and/or among multiple devices coupled to the network. As should be readily appreciated, various implementations of networks suitable for interconnecting multiple devices may include any of a variety of network topologies and employ any of a variety of communication protocols. Additionally, in various networks according to the present disclosure, any one connection between two devices may represent a dedicated connection between the two systems, or alternatively a non-dedicated connection. In addition to carrying information intended for the two devices, such a non-dedicated connection may carry information not necessarily intended for either of the two devices (e.g., an open network connection). Furthermore, it should be readily appreciated that various networks of devices as discussed herein may employ one or more wireless, wire/cable, and/or fiber optic links to facilitate information transport throughout the network.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.
FIG. 1 is a schematic representation of a three-axis system relative to the Earth.
FIG. 2 is a schematic representation of a lighting unit, in accordance with an embodiment.
FIG. 3A is a schematic representation of a lighting unit in a first position, in accordance with an embodiment.
FIG. 3B is a schematic representation of a lighting unit in a second position, in accordance with an embodiment.
FIG. 4 is a schematic representation of a lighting unit, in accordance with an embodiment.
FIG. 5 is a flowchart of a method for movement of a lighting unit, in accordance with an embodiment.

### DETAILED DESCRIPTION OF EMBODIMENTS

The present disclosure describes various embodiments of a lighting unit or lighting system configured to detect rotation about an axis parallel to the direction of gravity using an accelerometer or tilt sensor. More generally, Applicant has recognized and appreciated that it would be beneficial to provide a lighting unit, fixture, network, and system configured to detect rotation. A particular goal of utilization of certain embodiments of the present disclosure is to characterize rotation or movement of the lighting unit and translate the information into positioning information. The determined positioning information may also be used to modify the light emitted by the lighting unit.

In view of the foregoing, various embodiments and implementations are directed to a lighting unit comprising one or more integrated single- or multi-axis accelerometers, or one or more tilt sensors. The lighting unit also includes a gear that translates changes in the x axis or the *y* axis into changes in yaw (the *z* axis), and/or translates changes in yaw into changes in the *x* axis or the *y* axis. An algorithm detects these changes using data from the one or more accelerometers or tilt sensors, and translates the information into positioning information. The lighting unit may modify or adapt one or more characteristics of the unit based on the determined positioning information.

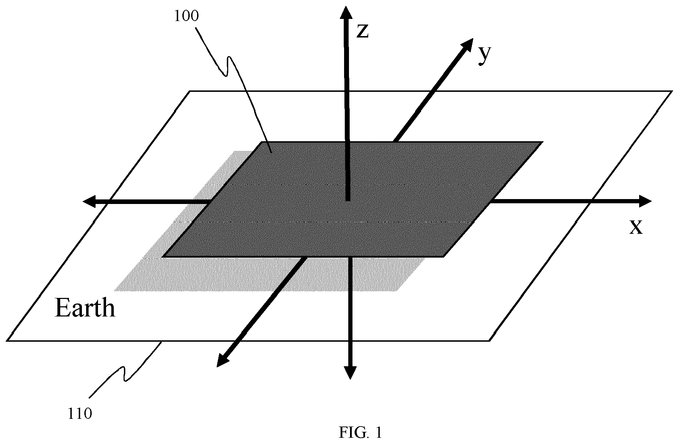

Referring to FIG. 1 is a schematic representation of a lighting unit 100 positioned relative to the Earth 110. Lighting unit 100 might be, for example, a ceiling light, a street light, or a variety of other internal or external light sources. The lighting unit can be moved about three axes, or a combination thereof. Rotation about the *y* axis, for example, will angle the lighting unit to the left or right in FIG. 1. Rotation about the x axis will angle the lighting unit into or out of the page in FIG. 1. Rotation about the *z* axis, which is parallel with the direction of gravity in FIG. 1, will rotate the lighting unit in a plane parallel to the surface of the Earth. If lighting unit 100 were to comprise an accelerometer or tilt sensor, the sensor would be able to detect movement or rotation about the x and *y* axes, as this movement or rotation will result in gravity-induced movement within the sensor. The sensor will not be able to detect rotation about the *z* axis, however, as this rotation will not result in gravity-induced movement within the sensor. Accordingly, the lighting unit needs a mechanism to be able to detect rotation about the *z* axis using the integrated sensor.

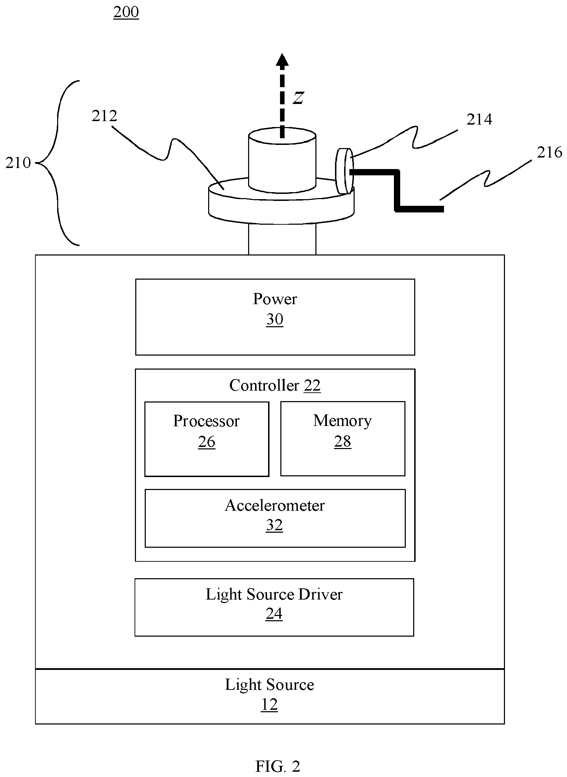

Referring to FIG. 2, in one embodiment, a lighting unit 200 is provided that includes one or more light sources 12, where one or more of the light sources may be an LED-based light source. Further, the LED-based light source may have one or more LEDs. The light source can be driven to emit light of predetermined character (i.e., color intensity, color temperature) by one or more light source drivers 24. Many different numbers and various types of light sources (all LED-based light sources, LED-based and non-LED-based light sources alone or in combination, etc.) adapted to generate radiation of a variety of different colors may be employed in the lighting unit 200. According to an embodiment, lighting unit 200 can be any type of lighting fixture, including but not limited to a street light, a headlight, or any other exterior lighting unit, fixture, or system. According to an embodiment, lighting unit 200 can be any type of interior lighting unit, such as a night light, table lamp, or any other interior lighting unit, fixture, or system. According to an embodiment, lighting unit 200 is configured to illuminate all or a portion of a target surface within the lighting environment.

According to an embodiment, lighting unit 200 includes a controller 22 that is configured or programmed to output one or more signals to drive the one or more light sources 12a-b and generate varying intensities, directions, and/or colors of light from the light sources. For example, controller 22 may be programmed or configured to generate a control signal for each light source to independently control the intensity and/or color of light generated by each light source, to control groups of light sources, or to control all light sources together. According to another aspect, the controller 22 may control other dedicated circuitry such as light source driver 24 which in turn controls the light sources so as to vary their intensities. Controller 22 can be or have, for example, a processor 26 programmed using software to perform various functions discussed herein, and can be utilized in combination with a memory 28. Memory 28 can store data, including one or more lighting commands or software programs for execution by processor 26, as well as various types of data including but not limited to specific identifiers for that lighting unit. For example, the memory 28 may be a non-transitory computer readable storage medium that includes a set of instructions that are executable by processor 26, and which cause the system to execute one or more of the steps of the methods described herein. Controller 22 can be programmed, structured and/or configured to cause light source driver 24 to regulate the intensity and/or color temperature of light source 12 based on predetermined data, such as ambient light conditions, among others, as will be explained in greater detail hereinafter. According to one embodiment, controller 22 can also be programmed, structured and/or configured to cause light source driver 24 to regulate the intensity and/or color temperature of light source 12 based on communications received by lighting unit 200.

Lighting unit 200 also includes a source of power 30, most typically AC power, although other power sources are possible including DC power sources, solar-based power sources, or mechanical-based power sources, among others. The power source may be in operable communication with a power source converter that converts power received from an external power source to a form that is usable by the lighting unit. In order to provide power to the various components of lighting unit 10, it can also include an AC/DC converter (e.g., rectifying circuit) that receives AC power from an external AC power source 30 and converts it into direct current for purposes of powering the light unit's components. Additionally, lighting unit 10 can include an energy storage device, such as a rechargeable battery or capacitor that is recharged via a connection to the AC/DC converter and can provide power to controller 22 and light source driver 24 when the circuit to AC power source 30 is opened.

Lighting unit 200 also includes one or more sensors 32. For example, sensor 32 may be an accelerometer, including but not limited to single-axis or multi-axis system such as a 6-axis or a 9-axis spatial sensor system. According to another embodiment, sensor 32 may be a tilt sensor configured to detect tilt. For example, the tilt sensor may be a rolling ball switch, a fluid-based tiltmeter, or any other tilt sensor. According to an embodiment, the lighting unit may include one or more of an accelerometer, a gyroscope, and/or a magnetometer to provide readings relative to axes of motion of the lighting unit, and to characterize the orientation and displacement of the device.

Lighting unit also includes a mechanism 210 configured to translate movement about a first axis (*x, y,* or *z*) into movement about a second axis (*x, y,* or *z*). For example, mechanism 210 may comprise a first gear 212 which is configured to cause a change in the yaw of the lighting unit. In other words, the first gear 212 causes rotation of the lighting unit 200 about the *z* axis in FIG. 2. The mechanism 210 may comprise a second gear 214 which is configured to rotate around an *x* and/or *y* axis, where the *x* and/or *y* axis is perpendicular to the *z* axis. First gear 212 further includes teeth or cogs configured to mesh with the teeth or cogs of the second gear 214, such that rotation of either first gear 212 or second gear 214 forcibly induces rotation of the other of first gear 212 and second gear 214. For example, as shown in FIG. 2, second gear 214 can rotate around the *x* and/or *y* axis, which is perpendicular to the *z* axis. The second gear includes a handle 216 that causes rotation of the second gear about the *x* and/or *y* axis, which in turn causes rotation of the first gear 212 about the z axis.

Mechanism 210 can also be configured to translate movement about a first axis (*x, y,* or *z*) into movement about both a second axis and a third axis. For example, mechanism 210 may comprise a first gear 212 which is configured to cause a change in the yaw of the lighting unit. In other words, the first gear 212 causes rotation of the lighting unit 200 about the z axis in FIG. 2. The mechanism 210 may comprise the second gear 214 which is configured to rotate simultaneously or sequentially around both the x and the *y* axis. For example, as shown in FIG. 2, second gear 214 can rotate around both the *x* axis and the *y* axis, which are perpendicular to the *z* axis.

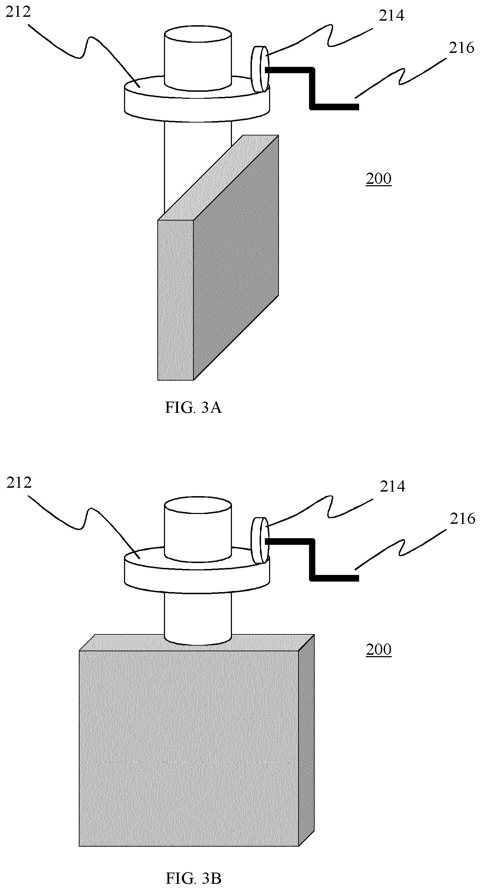

Referring to FIG. 3A, in one embodiment, is the lighting unit 200 positioned in a first position. To rotate the lighting unit 200 around the *z* axis and reposition it to a second position, a machine or user rotates the second gear 214, optionally using handle 216 or some other element that transfers rotational force to the gear. Rotation of the second gear 214 around the x and/or *y* axis causes rotation of the first gear 212 around the *z* axis, which in turn rotates the lighting unit around the *z* axis. In FIG. 3B, rotation of the second gear 214 has rotated the lighting unit 200 about the *z* axis to a second position.

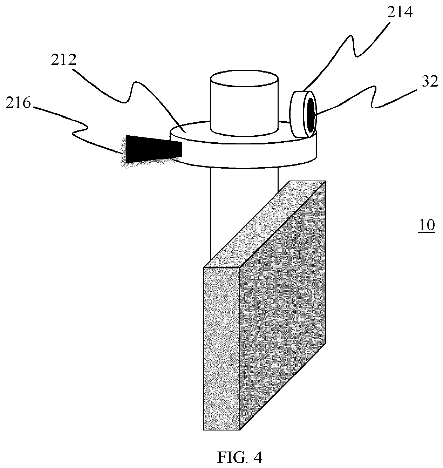

Referring to another embodiment of the lighting unit 200, shown in FIG. 4, the lighting unit is rotated about the *z* axis to move the unit from a first position to a second position by moving the first gear 212 by handle 216, which is attached to the first gear. Rotation of the first gear 212 around the z axis also moves the lighting unit 200 around the same axis. The rotation of the first gear 212 also causes rotation of the second gear 214 around the *x* and/or *y* axis. Accordingly, rotation around a first axis is translated into rotation around a second axis.

Although the movement of the lighting unit described herein is typically in reference to movement by a user, it is understood that movement can be accomplished automatically by a motor or other machine or mechanism.

The sensor 32, which is unable to detect rotation of the first gear 212 about the *z* axis, detects the rotation of the second gear 214 about the *x* and/or *y* axis, and sends this information to the controller 22 for analysis. Sensor 32 can detect the rotation of the second gear 214 about the x and/or *y* axis many different ways. The second gear 214 and sensor 32 may be in communication such that rotation of the second gear causes motion detection by the sensor. For example, rotation of second gear 214 may cause rotation of a second component of the lighting unit in the same direction. According to another embodiment, shown in FIG. 4, the second gear 214 may comprise an integrated accelerometer or tilt sensor which directly senses rotation of the second gear about the *x* and/or *y* axis.

Controller 22 receives information from the one or more sensors 32 and converts that information into rotation about the *z* axis and/or positioning information about the lighting unit 200. For example, controller 22 may receive data from sensor 32 indicating that the second gear 214 has rotated around the x and/or *y* axis, and will apply that information to an equal rotation of the first gear 212, and hence the lighting unit 200, around the z axis. The relationship between rotation of second gear 214 and the accompanying rotation of first gear 212 will depend on the relative sizes of the two gears. Translating rotation of one gear of a first size into rotation of a second gear of a second size may be experimentally derived or based on known relationships. Notably, there is no requirement that there is a one-to-one translation of rotation around the *x* and/or *y* axis to translation of rotation around the *z* axis, as, for example, an accelerometer's accuracy can decrease at lower readings where noise level can exceed signal level. Indeed, from an electronics and mechanical perspective, the connection between the accelerometer 32 and the controller 22 may benefit from a small translational change.

As described in greater detail below, once controller 22 analyses the sensor information, it can use that information for a wide variety of applications, including but not limited to determining the position of the lighting unit and/or repositioning the lighting unit. For example, if the lighting unit is subject to a specific lighting plan or scheme, the sensor information can be utilized to measure adherence to that plan, and/or to reposition the lighting unit in order to satisfy the plan. This may require, in some embodiments, other information about the lighting unit relative to one or more other components of the lighting system, such as an initial position.

According to another embodiment, the lighting unit comprises gesture control which includes rotational control. For example, a tilt-gesture enabled by the integrated sensor can also provide an intensity-dial or color wheel on the lighting unit, such that rotation about the z axis in a first direction increases light output, while rotation about the *z* axis in the opposite direction decreases light output. The degree of rotation may translate to the amount of increase and/or decrease.

Although many of the embodiments are described in reference to lighting units, it should be appreciated that the method and system for monitoring rotation about the *z* axis could be utilized in a wide variety of devices. For example, the method and system could be implemented in any device where a movable mechanical part rotates around the *z* axis, and in devices where there is orientation in multiple axes including the *z* axis. For instance, the system and method may be implemented to assist orientation-sensitive sensors like passive infrared sensors and radars. According to another embodiment, existing door or window movement sensors with an integrated sensor to measure tilt can use the method and system described or otherwise envisioned herein to detect the opening and/or closing, as well as the degree or amount of opening and/or closing, of the window or door. This typically involves a rotation of one or more hinges about the *z* axis, which can be measured by having an additional mechanical element within the sensor box, according to an embodiment.

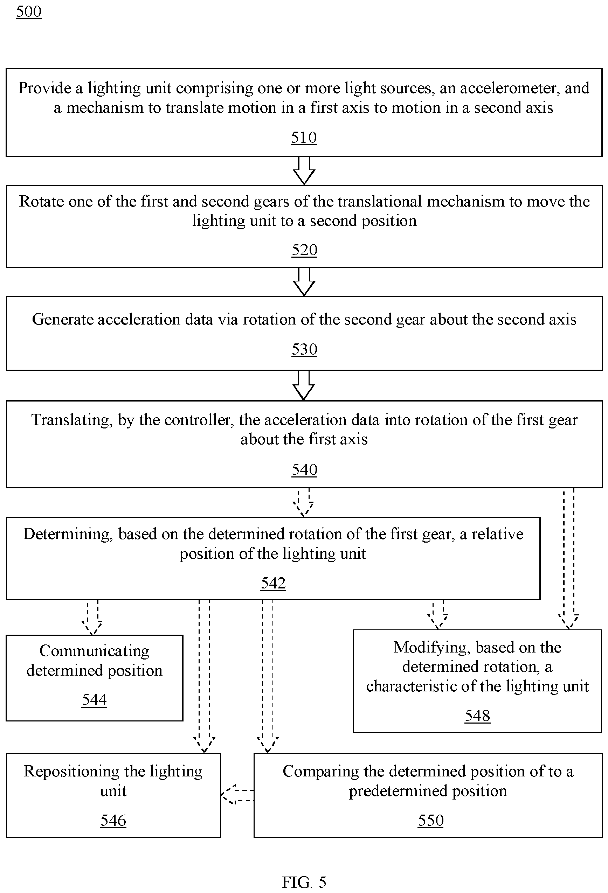

Referring to FIG. 5, in one embodiment, is a flow chart illustrating a method 500 for detecting rotation of a lighting unit. At step 510 of the method, a lighting unit 200 is provided. Lighting unit 200 can be any of the embodiments described herein or otherwise envisioned, and can include any of the components of the lighting units described in conjunction with FIGS. 2-4, including but not limited to one or more light sources 12, light source driver 24, controller 22, sensor 32 such as an accelerometer or tilt sensor, and mechanism 210, among other elements. According to an embodiment, lighting unit 200 is configured to illuminate all or a portion of a lighting environment. According to an embodiment, mechanism 210 is configured to translate movement about a first axis (*x, y,* or *z*) into movement about a second axis (*x, y,* or *z*). For example, mechanism 210 may comprise a first gear 212 configured to cause a change in the yaw (or *z* axis) of the lighting unit, and a second gear 214 configured to rotate around an *x* and/or *y* axis, where the *x* axis and the *y* axis are perpendicular to the *z* axis. Mechanism 210 may also comprise a handle 216 or other component configured to cause mechanical rotation of first gear 212 and/or second gear 214. At any given time point, lighting unit 200 will be oriented in a first position.

At step 520 of the method, one of the first and second gears is rotated. To rotate the lighting unit 200 and reposition it to a second position, a machine or user can rotate the second gear 214, optionally using handle 216 or some other element that transfers rotational force to the gear. Rotation of the second gear 214 around the *x* and/or *y* axis causes rotation of the first gear 212 around the *z* axis, which in turn rotates the lighting unit around the *z* axis. Rotation of the second gear 214 rotates the lighting unit 200 about the *z* axis to a second position. According to another embodiment, moving the first gear 212 by handle 216 causes rotation of the lighting unit about the *z* axis from a first position to a second position, and rotation of the second gear 214 around the *x* and/or *y* axis. Although the movement of the lighting unit described herein is typically in reference to movement by a user, it is understood that movement can be accomplished automatically by a motor or other machine or mechanism.

At step 530 of the method, rotation of the second gear 214 about the *x* and/or *y* axis causes the sensor 32 to generate sensor data, which is sent to the controller 22 for analysis. Sensor 32 can detect the rotation of the second gear 214 about the x and/or *y* axis many different ways. The second gear 214 and sensor 32 may be in communication such that rotation of the second gear causes motion detection by the sensor. For example, rotation of second gear 214 may cause rotation of a second component of the lighting unit in the same direction. According to another embodiment, the second gear 214 may comprise an integrated sensor which directly senses rotation of the second gear about the x and/or *y* axis. Many other configurations are possible. For example, if sensor 32 is a tilt sensor, the rotation of the second gear 214 causes the sensor to tilt and to generate tilt data.

At step 540 of the method, the controller analyses the sensor data, and translates the data into rotation of the first gear 212. For example, controller 22 may receive data from sensor 32 indicating that the second gear 214 has rotated or tilted around the *x* and/or *y* axis, and will apply that information to an equal rotation of the first gear 212, and hence the lighting unit 200, around the *z* axis. The relationship between rotation of second gear 214 and the accompanying rotation of first gear 212 will depend on the relative sizes of the two gears. Translating rotation of one gear of a first size into rotation of a second gear of a second size may be experimentally derived or based on known relationships.

At optional step 542 of the method, the controller 22 determines a relative position of lighting unit 200 based on the determined rotation of the first gear. For example, the controller may start with a known positioning of the lighting unit, or may receive position information. The subsequent rotation of the first or second gear causes the generation of sensor data which is used by the controller to determine rotation of the lighting unit about the *z* axis. The controller uses the determined rotation of the lighting unit about the *z* axis to determine the new position of the lighting unit. This may be supplemented, for example, with information about rotation of the lighting unit about the *x* and/or *y* axes, which can be provided by sensor 32 and/or by a second sensor.

At optional step 544, the determined rotation and/or relative position of lighting unit 200 is communicated to, for example, another lighting unit, to a user, to a central hub, a remote server such as a cloud-based server, or a management center. For example, the lighting unit may communicate its rotation and/or relative position to a central server or hub of a lighting system, thereby enabling cooperation of multiple lighting units. In addition to its rotation and/or relative position, the lighting unit 200 may communicate a unique identifier, historical information, and/or any other information possessed by the lighting unit or system.

At optional step 546 of the method, lighting unit 200 repositions itself, or directs repositioning, based at least in part on the rotation and/or determined relative position of the lighting unit. For example, lighting unit 200 may determine that it is misaligned within a lighting system or lighting plan, or may receive an instruction from a user to reposition or reorient itself, and will use the determined rotation and/or relative position information to perform a repositioning or reorienting maneuver.

At optional step 550, lighting unit 200 compares the determined rotation and/or relative position to a predetermined position. This may facilitate a determination, for example, that the lighting unit is misaligned or otherwise not properly oriented, particularly if the lighting unit is part of a lighting system or predetermined or pre-programmed lighting plan. If the lighting unit determines that it is misaligned or otherwise not properly oriented, it may proceed to optional step 546 to reposition itself.

At optional step 548 of the method, controller 22 of lighting unit 200 modifies one or more characteristics of the light source based on the determined rotation and/or relative position information. For example, the lighting unit may determine that it has been moved to a non-optimal orientation, and may turn on the light source, increase the intensity of the light source, decrease the intensity of the light source, or turn off the light source, among other options. As another example, the lighting unit may determine that, based on its new position or rotation, it should display a new color or other light characteristic. The response may be based on a predetermined or pre-programmed threshold or triggering event. For example, lighting unit 200 may respond to the new position or rotation by modifying the light source or displaying a light, text, or sound. For example, light signalling may comprise, among other things, changes in the light spectrum (intensity/hue) or beam profile, such as a flashing red light or other alert. As another example, the lighting unit may actively project information. Many other modifications of the lighting unit and/or other response methods are possible.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

## Claims

1. A method (500) for monitoring rotation of a lighting unit (200), the method comprising the steps of:
providing (510) a lighting unit comprising a sensor (32), a controller (22), a first gear (212) configured to rotate the lighting unit about a first axis, and a second gear (214) configured to rotate about a second axis, wherein the second axis is substantially perpendicular to the first axis, wherein the first and second gears are configured such that rotation of one of the first and second gear causes rotation of the other of the first and second gears, and wherein the lighting unit comprises a first position;
rotating (520) one of the first and second gears, wherein the rotation causes rotation of the lighting unit about the first axis from the first position to a second position;
generating (530), by the sensor in response to rotation of the second gear, sensor data; and
translating (540), by the controller, the acceleration data into information about rotation of the first gear.

2. The method of claim 1, wherein the sensor is an accelerometer or a tilt sensor.

3. The method of claim 1, wherein the first axis is substantially parallel to the direction of Earth's gravity.

4. The method of claim 1, wherein the method further comprises the step of determining (542), based on the determined rotation of the first gear, a relative position of the lighting unit.

5. The method of claim 4, wherein the method further comprises the step of communicating (544) the determined rotation of the first gear or the determined relative position of the lighting unit.

6. The method of claim 4, wherein the method further comprises the step of modifying (548), based at least in part on the determined relative position of the lighting unit, a parameter of the light source.

7. The method of claim 4, wherein the method further comprises the steps of: (i) comparing (550) the determined relative position of the lighting unit to a predetermined position; and (ii) optionally repositioning (546) the lighting unit according to at least one of the determined relative position and the predetermined position.

8. The method of claim 4, wherein the method further comprises the step of repositioning (546), based on the determined relative position of the lighting unit, the lighting unit to a third position.

9. A lighting unit (200), comprising:
a sensor (32);
a first gear (212) configured to rotate the lighting unit about a first axis;
a second gear (214) configured to rotate about a second axis, wherein the second axis is substantially perpendicular to the first axis, and wherein the first and second gears are configured such that rotation of one of the first and second gear causes rotation of the other of the first and second gears; and
a controller (22) configured to: (i) receive sensor data from the sensor in response to rotation of the second gear, wherein the rotation of the second gear causes rotation of the lighting unit about the first axis from a first position to a second position; and (ii) translate the received sensor data into information about rotation of the first gear.

10. The lighting unit of claim 9, wherein the sensor is an accelerometer or a tilt sensor

11. The lighting unit of claim 9, wherein the first axis is substantially parallel to the direction of Earth's gravity.

12. The lighting unit of claim 9, wherein the controller is further configured to determine, based on the determined rotation of the first gear, a relative position of the lighting unit.

13. The lighting unit of claim 11, wherein the controller is further configured to modify, based at least in part on the determined relative position of the lighting unit, a parameter of the light source.

14. A method (500) for monitoring rotation of a lighting unit (200), the method comprising the steps of:
providing (510) a lighting unit comprising a sensor (32), a controller (22), a first gear (212) configured to rotate the lighting unit about a first axis, and a second gear (214) configured to rotate about a second axis, wherein the second axis is substantially perpendicular to the first axis, wherein the first and second gears are configured such that rotation of one of the first and second gear causes rotation of the other of the first and second gears;
rotating (520) one of the first and second gears, wherein the rotation causes rotation of the lighting unit about the first axis from a first position to a second position;
generating (530), by the sensor in response to rotation of the second gear, acceleration data;
translating (540), by the controller, the sensor data into information about rotation of the first gear;
determining (542), based on the determined rotation of the first gear, a relative position of the lighting unit; and
repositioning (546), based on the determined relative position of the lighting unit, the lighting unit to a third position.

15. The method of claim 14, wherein the method further comprises the step of modifying (548), based at least in part on the determined relative position of the lighting unit, a parameter of the light source.
